# EUROPÄISCHE PATENTSCHRIFT

(11) **EP 4 477 520 B1**
(45) Veröffentlichungstag und Bekanntmachung des Hinweises auf die Patenterteilung: **21.01.2026**
(21) Anmeldenummer: 24182116.4
(22) Anmeldetag: 13.06.2024
(51) Int. Cl.: B62L 3/02

(54) **HYDRAULISCHE BREMSANORDNUNG FÜR EIN WENIGSTENS TEILWEISE MUSKELBETRIEBENES FAHRRAD**
HYDRAULIC BRAKE ASSEMBLY FOR A BICYCLE OPERATED AT LEAST PARTIALLY BY MUSCLE
ENSEMBLE FREIN HYDRAULIQUE POUR BICYCLETTE ENTRAÎNÉE AU MOINS PARTIELLEMENT PAR LA FORCE MUSCULAIRE

(30) Priorität: 15.06.2023 DE 102023115643
(43) Veröffentlichungstag der Anmeldung: 18.12.2024
(73) Patentinhaber: Trickstuff GmbH, 79292 Pfaffenweiler (DE)
(72) Erfinder: Schedel, Christoph, 79098 Freiburg (DE); Reiberg, Simon, D-79117 Freiburg (DE); Speichinger, Lukas, D-76133 Karlsruhe (DE)
(74) Vertreter: BSB Patentanwälte Schütte & Engelen Partnerschaft mbB

(56) Entgegenhaltungen:
- CN-A- 111 017 099
- US-A1- 2011 155 525
- US-A1- 2016 177 976

## Beschreibung

Die vorliegende Erfindung betrifft eine hydraulische Bremsanordnung für ein wenigstens teilweise muskelbetriebenes Fahrrad und umfasst wenigstens eine Gebereinheit, welche mit einer Nehmereinheit fluidisch verbindbar ist. Die Gebereinheit weist einen Bremshebel und ein Zylindergehäuse und eine in dem Zylindergehäuse verschiebbar aufgenommene Kolbeneinheit auf.

Ein wichtiges Merkmal für eine komfortable und sichere Bedienbarkeit von hydraulischen Fahrradbremsen stellt das System zur Einstellung der Bremshebelweite dar. Der Abstand bzw. Schwenkwinkel des Bremshebels zum Lenker hat einen entscheidenden Einfluss darauf, ob der Bremshebel beim Fahren gut erreicht und mit der notwendigen Betätigungskraft gezogen werden kann.

Bremsanordnungen für Fahrräder sind z. B. aus der CN111017099A, der US 2016/177976A1 und der US2011/155525A1 bekannt.

Allerdings kann die Hebelweite mitunter nur sehr unkomfortabel oder kompliziert und z. B. nur mit Werkzeug eingestellt werden. Daher wird vor Antritt der Fahrt häufig darauf verzichtet, die Hebelweite optimal einzustellen. Zudem haben manche Systeme den Nachteil, dass sie zugleich auch die Kinematik der Hebelmechanik verstellen. Beispielsweise kann es vorkommen, dass sich der Kniehebel verstärkt und der Druckpunkt weicher wird, wenn der Bremshebel besonders nah an den Lenker eingestellt wird.

Des Weiteren können die Systeme mitunter sehr empfindlich in Hinblick auf Verschmutzungen sein, wodurch sich der Verschleiß erhöht oder die Funktion beeinträchtigt wird. Dieser Aspekt ist besonders bei Mountainbikes sehr wichtig. Zudem sollte gewährleistet sein, dass sich die Hebelweite im Fahrbetrieb nicht ungewollt verstellt.

Demgegenüber ist es die Aufgabe der vorliegenden Erfindung, eine verbesserte hydraulische Bremsanordnung zur Verfügung zu stellen, welche die zuvor diskutierten Nachteile möglichst weitgehend ausräumt bzw. die gewünschten Anforderungen möglichst weitgehend erfüllt.

Diese Aufgabe wird gelöst durch eine Bremsanordnung mit den Merkmalen des Anspruchs 1. Bevorzugte Weiterbildungen sind Gegenstand der Unteransprüche. Weitere Vorteile und Merkmale der vorliegenden Erfindung ergeben sich aus der allgemeinen Beschreibung und aus der Beschreibung des Ausführungsbeispiels.

Die erfindungsgemäße hydraulische Bremsanordnung ist für ein wenigstens teilweise muskelbetriebenes Fahrrad vorgesehen. Die Bremsanordnung umfasst wenigstens eine Gebereinheit, welche mit einer Nehmereinheit fluidisch verbindbar ist. Die Bremsanordnung kann wenigstens eine Nehmereinheit und insbesondere eine Scheibenbremse umfassen. Die Gebereinheit umfasst einen schwenkbaren Bremshebel (und eine Hebelaufnahme) und ein Zylindergehäuse und eine in dem Zylindergehäuse verschiebbar aufgenommene Kolbeneinheit. Der Bremshebel wirkt auf einen schwenkbaren Nockenkörper einer Betätigungsmechanik ein, welche zur Betätigung der Kolbeneinheit dient. Dazu liegt der Bremshebel mit einem Druckabschnitt auf einem Druckbereich des Nockenkörpers auf. Der Bremshebel und der Nockenkörper sind (durch ein Ziehen des Bremshebels) gemeinsam um eine Hauptschwenkachse schwenkbar. Der Bremshebel ist relativ zum Nockenkörper um eine Einstellschwenkachse schwenkbar. Mittels eines Hebelweiteneinstellsystems ist einstellbar, wie weit der Bremshebel relativ zum Nockenkörper (und relativ zu einer Längsachse eines Lenkers, an welchem die Gebereinheit bestimmungsgemäß montierbar ist) um die Einstellschwenkachse verschwenkt ist, wenn der Bremshebel auf dem Druckbereich des Nockenkörpers aufliegt. Insbesondere ist mittels des Hebelweiteneinstellsystems der Abstand und/oder der Schwenkwinkel des Bremshebels relativ zu einem Lenker einstellbar, an welchem die Gebereinheit bestimmungsgemäß montiert ist. Dabei weist das Hebelweiteneinstellsystem eine Tonnenmutter auf, welche drehfest (verdrehsicher) und linear (in axialer Richtung) verschiebbar im Bremshebel gelagert ist. Das Hebelweiteneinstellsystem umfasst eine drehbar im Bremshebel gelagerte und in axialer Richtung fixierte Spindeleinheit. Dabei stehen die Tonnenmutter und die Spindeleinheit miteinander im Eingriff, sodass die Tonnenmutter durch Drehung der Spindeleinheit linear verschiebbar ist bzw. verschoben wird. Dabei stellt die Tonnenmutter an ihrem Tonnenboden den Druckabschnitt bereit.

Die erfindungsgemäße Bremsanordnung bietet viele Vorteile. Einen erheblichen Vorteil bietet das Hebelweiteneinstellsystem mit seinen erfindungsgemäß zusammenwirkenden Komponenten, welches die zuvor diskutierten Anforderungen an die Hebelweiteneinstellung besonders zuverlässig und zugleich konstruktiv unaufwendig erfüllen kann. Dabei erfolgt die Einstellung der Hebelweite, ohne dass die Kinematik für die Betätigung der Kolbeneinheit unerwünscht beeinflusst wird. Besonders vorteilhaft ist auch die im Bremshebel linear geführte Tonnenmutter. Diese ermöglicht eine leichtgängige und komfortable Verstellung und bietet einen zuverlässigen Schutz vor einem Schmutzeintrag in die Mechanik.

In einer vorteilhaften und bevorzugten Ausgestaltung sind die Hauptschwenkachse und die Einstellschwenkachse identisch. Mit anderen Worten, die Hauptschwenkachse und die Einstellschwenkachse sind dieselbe Schwenkachse. Insbesondere sind der Bremshebel und der Nockenkörper um die Hauptschwenkachse schwenkbar (an einer Hebelaufnahme) gelagert. Das bietet eine sehr kompakte und leichte und zugleich bauteilreduzierte Umsetzung der Erfindung. Insbesondere sind die Hauptschwenkachse und die Einstellschwenkachse koaxial.

In einer weiteren vorteilhaften und bevorzugten Ausgestaltung liegt die Hauptschwenkachse näher zu einem distalen Ende des Bremshebels als die Einstellschwenkachse. Insbesondere sind die Hauptschwenkachse und die Einstellschwenkachse dann separat und insbesondere beabstandet ausgebildet. Das bietet eine besonders ergonomische und zugleich sehr kompakte Hebelkinematik bzw. Hebelweitenverstellung. Zugleich sind dadurch besonders feine Winkelveränderungen beim Einstellen der Hebelweite möglich. Vorzugsweise ist der Nockenkörper an der Hebelaufnahme gelagert, sodass er um die Hauptschwenkachse schwenkbar ist. Der Bremshebel ist vorzugsweise an dem Nockenkörper gelagert, sodass er (relativ zum Nockenkörper) um die Einstellschwenkachse schwenkbar ist. Wenn der Bremshebel zum Bremsen gezogen wird, schwenkt er insbesondere gemeinsam mit dem Nockenkörper um die Hauptschwenkachse. Insbesondere stützt sich der Bremshebel dabei auf dem Druckbereich des Nockenkörpers ab. Insbesondere kann der Bremshebel nur gemeinsam mit dem Nockenkörper um die Hauptschwenkachse verschwenkt werden.

Insbesondere verlaufen die Hauptschwenkachse und die Einstellschwenkachse (und gegebenenfalls eine Pleuelschwenkachse) parallel zueinander. Insbesondere verlaufen die Hauptschwenkachse und die Einstellschwenkachse (und gegebenenfalls eine Pleuelschwenkachse) quer zur Längsachse des Bremshebels. Insbesondere liegt die Hauptschwenkachse näher zu einem Ende des Lenkers, an dem die Gebereinheit befestigt ist, als die Einstellschwenkachse. Insbesondere liegt die Hauptschwenkachse näher zu einer Längsachse eines Lenkers und/oder zu einem Lenker, an dem die Gebereinheit bestimmungsgemäß montiert ist, als die Einstellschwenkachse. Die Bremsanordnung kann wenigstens einen Lenker umfassen, an dem die Gebereinheit bestimmungsgemäß montierbar ist.

Insbesondere liegt die Hauptschwenkachse näher zu dem Druckabschnitt und/oder zu der Tonnenmutter und/oder zu der Spindeleinheit als die Einstellschwenkachse. Insbesondere liegt die Hauptschwenkachse näher zu einer durch den Nockenkörper verlaufenden Pleuelschwenkachse als die Einstellschwenkachse. Insbesondere verläuft die Pleuelschwenkachse näher zu einer Längsachse eines Lenkers als die Einstellschwenkachse und die Hauptschwenkachse. Insbesondere ist die Einstellschwenkachse weiter von einer Längsachse des Lenkers entfernt als die Pleuelschwenkachse und die Hauptschwenkachse.

Insbesondere liegt die Einstellschwenkachse näher zu einem proximalen Ende des Lenkers als die Hauptschwenkachse. Insbesondere liegt die Einstellschwenkachse näher zu dem Zylindergehäuse und/oder zur Kolbeneinheit als die Hauptschwenkachse. Insbesondere liegt die Einstellschwenkachse näher zu einem Ende des Zylindergehäuses, an dem die Leitungseinrichtung zur Verbindung mit der Nehmereinheit anschließbar ist, als die Hauptschwenkachse. Insbesondere ist die Einstellschwenkachse weiter von einer Längsachse eines Lenkers und/oder von einem Lenker, an dem die Gebereinheit bestimmungsgemäß montiert ist, entfernt als die Hauptschwenkachse.

Das Hebelweiteneinstellsystem umfasst vorzugsweise wenigstens einen Drehknopf zum Drehen der Spindeleinheit. Vorzugsweise ist die Spindeleinheit drehfest mit dem Drehknopf verbunden. Insbesondere steckt die Spindeleinheit in einem Durchgangsloch des Drehknopfs. Insbesondere wird die drehfeste Verbindung durch einen Formschluss zwischen Spindeleinheit und Drehknopf bereitgestellt. Für den Formschluss weisen die Spindeleinheit und der Drehknopf insbesondere jeweils wenigstens einen unrunden Abschnitt (beispielsweise eine Verzahnung oder dergleichen) auf. Insbesondere ist der unrunde Abschnitt des Drehknopfes an einer das Durchgangsloch umgebenden Wandung des Drehknopfs ausgebildet.

Vorzugsweise weist der Drehknopf an seiner radialen Außenseite eine Verzahnung auf. Die Verzahnung dient insbesondere dazu, dass der Drehknopf besser mit den Fingern gedreht werden kann. Die Verzahnung kann beispielsweise als Rändelung (engl. knurling) oder als Wellenkontur oder dergleichen ausgebildet sein.

Es ist möglich und vorteilhaft, dass die Spindeleinheit mittels des Drehknopfs an dem Bremshebel gesichert und vorzugsweise verliersicher aufgenommen ist. Insbesondere ist die Spindeleinheit mittels des Drehknopfes in Bezug auf ihre axiale Bewegbarkeit an den Bremshebel fixiert. Insbesondere ist die Tonnenmutter mittels der Spindeleinheit an dem Bremshebel gesichert.

Die Spindeleinheit verläuft insbesondere durch eine Durchgangsöffnung im Bremshebel. Insbesondere weist der Bremshebel eine Durchgangsöffnung auf, durch welche sich die Spindeleinheit erstreckt. Insbesondere verläuft die Durchgangsöffnung von einer der Tonnenmutter zugewandten Seite zu einer dem Drehknopf zugewandten Seite des Bremshebels.

In einer vorteilhaften Ausgestaltung weist die Spindeleinheit einen Flanschabschnitt auf. Der Flanschabschnitt ist auf einer der Tonnenmutter zugewandten Seite der Durchgangsöffnung an der Spindeleinheit angeordnet. Insbesondere ragt der Flanschabschnitt über einen Öffnungsquerschnitt der Durchgangsöffnung (in radialer Richtung) hinaus. Mit anderen Worten, der Flanschabschnitt passt nicht durch die Durchgangsöffnung. Insbesondere ist die Spindeleinheit dadurch in ihrer axialen Bewegbarkeit in eine Richtung fixiert. Insbesondere ist der Flanschabschnitt fest und vorzugsweise einstückig mit der Spindeleinheit ausgebildet. Insbesondere liegt der Flanschabschnitt an dem Bremshebel an. Insbesondere gleitet der Flanschabschnitt über den Bremshebel, wenn sich die Spindeleinheit dreht.

Vorzugsweise ist der Drehknopf auf einer der Tonnenmutter abgewandten Seite der Durchgangsöffnung angeordnet. Insbesondere ragt der Drehknopf über einen Öffnungsquerschnitt der Durchgangsöffnung (in radialer Richtung) hinaus. Mit anderen Worten, der Drehknopf passt nicht durch die Durchgangsöffnung. Insbesondere stützt sich der Drehknopf direkt oder indirekt (beispielsweise mittels eines Dichtelements) an den Bremshebel ab, wenn der Drehknopf gedreht wird. Insbesondere ist der Bremshebel zwischen dem Flanschabschnitt und dem Drehknopf formschlüssig aufgenommen. Insbesondere ist die Spindeleinheit durch den Flanschabschnitt und den Drehknopf in ihrer axialen Bewegbarkeit relativ zum Bremshebel in beide Richtungen fixiert.

In einer bevorzugten und vorteilhaften Ausgestaltung ist der Drehknopf lösbar an der Spindeleinheit befestigt. Insbesondere kann die Spindeleinheit ohne den Drehknopf durch die Durchgangsöffnung hindurchgesteckt werden. Insbesondere passt ein Abschnitt der Spindeleinheit, welche sich von dem Flanschabschnitt zu einem dem Drehkörper zugewandten Ende erstreckt, durch die Durchgangsöffnung hindurch. Insbesondere ist das der Abschnitt, welcher mit dem Drehknopf im formschlüssigen Eingriff steht.

Es ist bevorzugt und vorteilhaft, dass der Drehknopf mittels wenigstens einer (zentralen) in axialer Richtung verlaufenden Halteschraube an der Spindeleinheit befestigt ist. Das ermöglicht eine unaufwendige Montage bzw. eine komfortable Wartung auch für ungeübte Benutzer. Insbesondere verläuft die Halteschraube durch ein Durchgangsloch im Drehknopf in die Spindeleinheit. Insbesondere ist die Spindeleinheit dabei zwischen den Drehknopf und dem Durchgangsloch angeordnet. Insbesondere ist die Halteschraube in ein Innengewinde der Spindeleinheit geschraubt. Vorzugsweise dichtet ein Kopf der Halteschraube das Durchgangsloch im Drehknopf alleine oder in Kombination mit einem Dichtmittel ab.

Insbesondere weist der Dichtkörper an seiner Stirnseite eine (zylindrische) Vertiefung auf. Insbesondere bilden der Drehknopf und die Halteschraube zusammen eine im Wesentlichen flächenbündige Stirnseite aus, wenn die Halteschraube in der Vertiefung aufgenommen bzw. eingeschraubt ist. Die Stirnseite ist insbesondere konvex (linsenförmig) gewölbt. Möglich sind auch andere Geometrien der Stirnseite.

Es ist besonders bevorzugt, dass die Tonnenmutter (an ihrer radialen Außenseite) Erhebungen aufweist, welche in axialer Richtung verlaufen. Vorzugsweise weist der Bremshebel Nuten auf, welche mit den Erhebungen korrespondieren. Vorzugsweise wird die Tonnenmutter in den Nuten mittels ihrer Erhebungen linear geführt und insbesondere auch gegen Verdrehen gesichert. Das ermöglicht eine unaufwendig herstellbare und zugleich leichtgängige Führung der Tonnenmutter. Insbesondere dienen die Erhebungen in Kombination mit dem Dichtkörper als eine Begrenzung beim Herausschrauben der Tonnenmutter. Es ist möglich, dass die Spindeleinheit einen Stützkragen aufweist, welche als Begrenzung beim Hereinschrauben der Tonnenmutter dient.

Insbesondere sind mehrere Erhebungen über den Umfang der Tonnenmutter verteilt. Insbesondere weist der Bremshebel eine Aufnahmeaussparung für die Tonnenmutter auf. Insbesondere sind die Nuten entlang des Umfangs der Aufnahmeaussparung verteilt. Insbesondere sind die Nuten in den Bremshebel eingearbeitet (durch Materialabtragung). Insbesondere verlaufen die Nuten in axialer Richtung bzw. in Längsrichtung der Durchgangsöffnung.

Die Spindeleinheit ragt mit ihrem der Tonnenmutter zugewandten Ende vorzugsweise nicht über den Außenumfang des Bremshebels hinaus. Die Spindeleinheit ragt vorzugsweise auch mit ihrem dem Drehknopf zugewandten Ende nicht über den Außenumfang des Bremshebels hinaus. Das ermöglicht eine besonders kompakte und vor mechanischer Beschädigung und Verschmutzung geschützte Integration in den Bremshebel.

Insbesondere ist die Spindeleinheit maximal so lang wie der Bremshebel in Längsrichtung der Spindeleinheit (an der Position der Spindeleinheit) stark ist. Insbesondere ist das dem Drehknopf zugewandte Ende der Spindeleinheit, welches aus der Durchgangsöffnung des Bremshebels herausragt, vollständig durch den Drehknopf und/oder die Halteschraube verdeckt. Insbesondere ist das der Tonnenmutter zugewandte Ende wenigstens teilweise durch die Tonnenmutter verdeckt.

In einer vorteilhaften Weiterbildung ist der Drehknopf (wenigstens teilweise) in den Bremshebel eingelassen. Insbesondere ragt der Drehknopf (nur) an zwei gegenüberliegenden Längsseiten des Bremshebels über den Außenumfang des Bremshebels hinaus. Insbesondere ist der Durchmesser des Drehknopfes größer als die Breite des Bremshebels (an der Position des Drehknopfes). Insbesondere weist der Bremshebel eine (quer zu seiner Längsachse verlaufende) Aufnahmenut auf, in welcher der Drehknopf eingelassen ist. Insbesondere ist die Aufnahmenut an wenigstens einer Längsseite und vorzugsweise an beiden gegenüberliegenden Längsseiten offen ausgebildet.

Vorzugsweise ist die Tonnenmutter (wenigstens teilweise) in den Bremshebel eingelassen. Insbesondere ragt die Tonnenmutter nur an einer dem Nockenkörper zugewandten Seite des Bremshebels über den Bremshebel hinaus. Insbesondere ist der Durchmesser der Tonnenmutter kleiner als die Breite des Bremshebels.

Insbesondere ist die Tonnenmutter in eine Aufnahmeaussparung des Bremshebels eingelassen. Insbesondere sind in der Aufnahmeaussparung die Nuten und/oder der nachfolgend beschriebene Dichtkörper angeordnet. Insbesondere sind die Tonnenmutter und die Spindeleinheit in der Aufnahmeaussparung miteinander verschraubt. Insbesondere ragt die Spindeleinheit nicht aus der Aufnahmeaussparung heraus. Insbesondere sind die Aufnahmeaussparung und die Durchgangsöffnung koaxial angeordnet. Insbesondere weist die Aufnahmeaussparung einen größeren Durchmesser als die Durchgangsöffnung auf.

In einer bevorzugten Weiterbildung umfasst das Hebelweiteneinstellsystem wenigstens einen Klickmechanismus zur Erzeugung wenigstens eines haptisch und/oder akustisch wahrnehmbaren Klicks beim Drehen des Drehknopfes. Vorzugsweise umfasst der Klickmechanismus Klickvertiefungen und wenigstens ein federvorgespanntes Klickelement zum Eingreifen in die Klickvertiefungen. Das Klickelement ist insbesondere eine Kugel oder dergleichen. Das Klickelement kann separat zur Vorspannfeder ausgebildet sein. Das Klickelement kann einstückig mit der Vorspannfeder verbunden sein. Beispielsweise ist das Klickelement dann als ein (distaler) Abschnitt der Vorspannfeder ausgebildet.

Vorzugsweise umfasst der Klickmechanismus wenigstens eine einstückig mit dem Bremshebel verbundene Vorspannfeder zum Vorspannen des Klickelements. Mit anderen Worten, die Vorspannfeder ist ein Teil des Werkstoffgefüges des Bremshebels. Insbesondere ist ein Teil des Bremshebels dazu als ein biegsamer bzw. elastischer Abschnitt ausgebildet. Beispielsweise ist ein Teil des Bremshebels als eine Blattfeder oder eine andere geeignete Federart ausgebildet. Zusätzlich oder alternativ kann auch das Klickelement einstückig mit dem Bremshebel verbunden sein.

Der Bremshebel ist vorzugsweise mittels eines additiven Fertigungsverfahrens und beispielsweise eines 3D-Drucks oder dergleichen hergestellt. Insbesondere ist der Bremshebel einstückig ausgebildet. Möglich ist auch, dass die Vorspannfeder mit einem anderen Bauteil der Bremsanordnung einstückig verbunden ist. Insbesondere ist wenigstens die Vorspannfeder mittels eines additiven Fertigungsverfahrens und beispielsweise eines 3D-Drucks oder dergleichen hergestellt. Die Anmelderin behält sich vor, eine Bremsanordnung mit einem Klickmechanismus für ein Hebelweiteneinstellsystem zu beanspruchen, bei welcher der Klickmechanismus eine einstückig mit dem Bremshebel und/oder einem anderen Bauteil der Bremsanordnung verbundene Vorspannfeder umfasst.

Das Klickelement ist insbesondere an der Spindeleinheit und vorzugsweise an dem Flanschabschnitt angeordnet. Vorzugsweise sind die Klickvertiefungen an den Bremshebel angeordnet und insbesondere in den Bremshebel eingearbeitet (durch Materialabtragung). Möglich ist auch eine umgekehrte Ausgestaltung, sodass das Klickelement und/oder die Vorspannfeder an dem Bremshebel und die Klickvertiefungen an der Spindeleinheit angeordnet sind. Dann kann die Spindeleinheit z. B. sternförmige Außenkontur zur Bereitstellung der Klickvertiefungen aufweisen.

Insbesondere weist die Spindeleinheit, vorzugsweise der Flanschabschnitt, einen radial verlaufenden Aufnahmeraum auf. Insbesondere ist in dem Aufnahmeraum wenigstens eine Vorspannfeder angeordnet. Insbesondere ist das Klickelement mittels der Vorspannfeder nach radial außen in die Klickvertiefungen drückbar. Insbesondere ist der Aufnahmeraum durch eine Bohrung oder ein vergleichbares Verfahren hergestellt. Der Aufnahmeraum kann auch im Bremshebel sein. Dann ist das Klickelement insbesondere nach radial außen in die Klickvertiefungen der Spindeleinheit drückbar.

In einer vorteilhaften Ausgestaltung werden die Klickvertiefungen durch die Nuten zur linearen Führung der Tonnenmutter bereitgestellt. Die Klickvertiefungen können auch separat zu den Nuten ausgebildet sein. Die Klickvertiefungen sind insbesondere in der Aufnahmeaussparung über deren Umfang verteilt angeordnet.

Es ist bevorzugt und vorteilhaft, dass zwischen der Tonnenmutter und den Bremshebel wenigstens ein Dichtkörper angeordnet ist. Der Dichtkörper ist vorzugsweise an dem Bremshebel festgelegt. Insbesondere ist der Dichtkörper in einer ringförmig um die Tonnenmutter herumlaufenden Nut des Bremshebels angeordnet. Der Dichtkörper kann auch an der Tonnenmutter festgelegt sein. Dann weist die Tonnenmutter insbesondere eine umlaufende Nut auf. Der Dichtkörper ist insbesondere als ein Dichtring und beispielsweise als ein O-Ring oder dergleichen ausgebildet. So werden die Aufnahmeaussparung und die lineare Führung der Tonnenmutter sowie die Gewindeverbindung zwischen Spindeleinheit und Tonnenmutter zuverlässig vor Schmutz und Wasser geschützt.

Bevorzugt und vorteilhaft ist auch, dass zwischen einer dem Bremshebel zugewandten Stirnseite des Drehknopfes und dem Bremshebel wenigstens ein Dichtelement angeordnet ist. Dadurch wird zuverlässig verhindert, dass von dieser Seite Schmutz oder Wasser in die Mechanik eindringen können. Insbesondere liegt das Dichtelement im Bereich der Aufnahmeaussparung an dem Bremshebel an. Vorzugsweise umschließt das Dichtelement die Spindeleinheit ringförmig und beabstandet zu der Spindeleinheit. Insbesondere ist das Dichtelement am Drehknopf festgelegt und vorzugsweise in einer Ringnut des Drehknopfs befestigt. Das Dichtelement kann auch am Bremshebel festgelegt sein. Dann weist der Bremshebel insbesondere eine Ringnut auf, in welcher das Dichtelement befestigt ist. Das Dichtelement ist insbesondere ein Dichtring. Insbesondere ist das Dichtelement als eine Formdichtung und beispielsweise als eine Lippendichtung mit wenigstens v-förmig oder x-förmig angeordneten Dichtlippen ausgebildet.

In allen Ausgestaltungen ist es besonders bevorzugt, dass die Tonnenmutter und insbesondere der Druckabschnitt nur lose auf dem Druckbereich des Nockenkörpers aufliegt. So führt die Einstellung der Hebelweite mit dem hier vorgestellten Hebelweiteneinstellsystem zu keiner unerwünschten Veränderung der Kinematik. Insbesondere sind der Druckabschnitt und der Druckbereich nicht aneinander befestigt. Außerhalb der (gemeinsamen) Hauptschwenkachse und/oder der Einstellschwenkachse sind der Nockenkörper und der Bremshebel vorzugsweise nicht miteinander verbunden und insbesondere nicht verschraubt oder in anderer Weise gefügt.

Es ist möglich und vorteilhaft, dass der Nockenkörper und der Bremshebel mittels Vorspannung bzw. Federkraft einer Vorspanneinrichtung aufeinandergedrückt werden. Insbesondere können der Nockenkörper und der Bremshebel in wenigstens eine Richtung über wenigstens einen Schwenkwinkelbereich unabhängig voneinander verschwenkt werden. Insbesondere sind der Nockenkörper und der Bremshebel nicht (über den gesamten Schwenkwinkelbereich) drehfest miteinander verbunden.

Es ist möglich, dass der Bremshebel und/oder der Nockenkörper mittels einer Vorspanneinrichtung so vorgespannt sind, dass der Druckabschnitt und der Druckbereich (durch Federkraft) aufeinandergedrückt werden. Insbesondere umfasst die Vorspanneinrichtung wenigstens eine Feder. Vorzugsweise ist die wenigstens eine Feder als Spiralfeder ausgebildet. Möglich sind auch andere Federarten. Insbesondere ist die wenigstens eine Feder an einem proximalen Ende des Bremshebels angeordnet. Insbesondere liegt die Feder näher zur Einstellschwenkachse als zur Hauptschwenkachse. Insbesondere liegt die Einstellschwenkachse zwischen der Feder und der Hauptschwenkachse. Insbesondere verläuft die Kraftrichtung der Feder quer zur Einstellschwenkachse und zur Hauptschwenkachse und/oder quer zur Längsachse des Bremshebels. Vorzugsweise sind wenigstens zwei Federn vorgesehen. Insbesondere sind die wenigstens zwei Federn parallel nebeneinander angeordnet. Insbesondere sind die Federn identisch ausgebildet. Insbesondere sind die Federn beide so ausgebildet, wie zuvor beschrieben.

Es ist vorteilhaft und bevorzugt, dass der Druckabschnitt gewölbt ausgebildet ist. Insbesondere ist der Tonnenboden wenigstens am Druckabschnitt gewölbt ausgebildet. Insbesondere ist der Nockenkörper am Druckbereich korrespondierend zum Druckabschnitt gewölbt ausgebildet. Insbesondere sind der Druckabschnitt und der Druckbereich derart aufeinander abgestimmt und vorzugsweise gewölbt, dass der Druckabschnitt bei den bestimmungsgemäß vorgesehenen Hebelweiteneinstellungen nicht an dem Nockenkörper verkantet.

Es ist möglich und vorteilhaft, dass das (gesamte) Hebelweiteneinstellsystem (nur) am Bremshebel befestigt ist. Insbesondere bildet das Hebelweiteneinstellsystem zusammen mit dem Bremshebel und vorzugsweise mit dem Nockenkörper und insbesondere auch mit der Vorspanneinrichtung eine Montageeinheit. Dabei kann die Montageeinheit als ein Bauteil gehandhabt und vorzugsweise als ein Bauteil von einer Hebelaufnahme der Gebereinheit gelöst und wieder an der Hebelaufnahme befestigt werden. So kann beispielsweise ein herkömmlicher Bremshebel durch einen Bremshebel mit Hebelweiteneinstellsystem auch von unerfahrenen Benutzern nachgerüstet werden. Es ist möglich, dass der Bremshebel und der Nockenkörper mittels eines Stifts oder dergleichen im Bereich der Einstellschwenkachse aneinander befestigt sind, um die Montageeinheit bereitzustellen.

Die Anmelderin behält sich vor, ein Fahrrad mit einer hydraulischen Bremsanordnung zu beanspruchen, wie sie hier beschrieben ist. Auch ein solches Fahrrad löst die zuvor gestellte Aufgabe besonders vorteilhaft.

Insbesondere ist das Hebelweiteneinstellsystem dazu geeignet und ausgebildet, den Schwenkwinkel bzw. Abstand des Bremshebels zu einem Lenker einzustellen, an welchem die Gebereinheit bestimmungsgemäß montiert ist. Insbesondere ist das Hebelweiteneinstellsystem dazu geeignet und ausgebildet, die Hebelweite zu verstellen, ohne eine Kinematik des Bremshebels und der Betätigungsmechanik (insbesondere das Prinzip des Kniehebels) zu verändern. Insbesondere wird durch die Einstellung der Hebelweite mit dem Hebelweiteneinstellsystem nur der Bremshebel relativ zum Nockenkörper um die (gemeinsame) Hauptschwenkachse und/oder die Einstellschwenkachse verschwenkt.

Insbesondere ist der Bremshebel über die Betätigungsmechanik mit der Kolbeneinheit wirkverbunden. Der Bremshebel wirkt insbesondere direkt auf den Nockenkörper. Insbesondere wirkt der Nockenkörper mittels weiterer Komponenten der Betätigungsmechanik auf die Kolbeneinheit ein. Der Nockenkörper weist insbesondere einen Nocken auf, welcher ausgehend von der Schwenkachse nach radial außen hebelartig absteht. Insbesondere ist der Druckbereich an einer der Tonnenmutter zugewandten Seite des Nockens ausgebildet.

Insbesondere verläuft die (gemeinsame) Hauptschwenkachse und/oder die Einstellschwenkachse von Bremshebel und Nockenkörper quer und vorzugsweise rechtwinklig zur Längsachse der Spindeleinheit. Insbesondere ist die Tonnenmutter quer und vorzugsweise rechtwinklig zur (gemeinsamen) Schwenkachse und/oder zur Einstellschwenkachse linear verschiebbar. Im Bereich der (gemeinsamen) Hauptschwenkachse und/oder der Einstellschwenkachse können der Bremshebel und der Nockenkörper schwenkbar aneinander befestigt sein. Beispielsweise ist der Nockenkörper dort mit einem Stift oder dergleichen im Bremshebel gesichert.

Insbesondere verläuft eine Längsachse des Hebelweiteneinstellsystems, insbesondere die Längsachse der Spindeleinheit und/oder der Tonnenmutter und/oder der Durchgangsöffnung und/oder des Drehknopfes, quer zur Längsachse des Bremshebels. Insbesondere sind die Spindelmutter und/oder der Drehknopf und/oder die Tonnenmutter und/oder der Bremshebel einstückig ausgebildet. Insbesondere sind der Flanschabschnitt und der Stützkragen einstückig mit der übrigen Spindeleinheit ausgebildet. Insbesondere ist die Hebelaufnahme einstückig mit dem Zylindergehäuse ausgebildet. Insbesondere sind das Zylindergehäuse und die Hebelaufnahme und wenigstens ein Teil der Lenkeranbindung integrale Bestandteile eines Basiskörpers der Gebereinheit.

Insbesondere sind die Tonnenmutter und die Spindeleinheit formschlüssig und vorzugsweise mittels einer Gewindeverbindung miteinander verbunden. Insbesondere weisen die Spindeleinheit und die Tonnenmutter jeweils ein Gewinde auf, über welche sie miteinander im Eingriff stehen. Insbesondere weist die Tonnenmutter ein mit einem Außengewinde der Spindeleinheit korrespondierendes Innengewinde auf. Die Spindeleinheit erstreckt sich insbesondere mit einem Ende in die Tonnenmutter. Insbesondere ist dieses Ende von Tonnenboden vollständig verdeckt. Insbesondere ist die Tonnenmutter an dem Tonnenboden vollständig verschlossen.

Insbesondere sind die folgenden Komponenten des Hebelweiteneinstellsystems, sofern sie in der jeweiligen Ausgestaltung vorgesehen sind, koaxial zueinander angeordnet: Spindeleinheit, Tonnenmutter, Drehknopf, Halteschraube, Durchgangsöffnung, Dichtkörper, Dichtelement, Aufnahmeaussparung.

Insbesondere ist die Kolbeneinheit über die Betätigungsmechanik mit dem Bremshebel wirkverbunden, sodass die Kolbeneinheit infolge einer Betätigung der Gebereinheit im Zylinderraum verschoben wird. Die Gebereinheit wird insbesondere am Bremshebel betätigt. Die Betätigungsmechanik umfasst insbesondere wenigstens einen Pleuel (mit einer Pleuelstange und einem Pleuelkopf). Insbesondere ist der Pleuelkopf fest mit der Pleuelstange verbunden. Insbesondere ist der Pleuel einstückig ausgebildet. Insbesondere ist der Pleuel (mit seiner Pleuelstange) um eine Pleuelschwenkachse schwenkbar am Nockenkörper angebunden. Insbesondere sind der Pleuel und der Nockenkörper relativ zueinander schwenkbar. Insbesondere verläuft die Pleuelschwenkachse durch den Nockenkörper. Insbesondere stellt der Pleuel eine Druckverbindung (und gegebenenfalls auch eine Zugverbindung) zwischen dem Nockenkörper und der Kolbeneinheit bereit.

Im Rahmen der vorliegenden Erfindung werden unter der Hauptschwenkachse und der Einstellschwenkachse insbesondere gedachte Achsen verstanden. Zum Verschwenken um die Hauptschwenkachse und die Einstellschwenkachse sind insbesondere an sich bekannte Komponenten zur Lagerung von Bauteilen (Stifte, Bolze, Buchsen und/oder Lager etc.) vorgesehen. Insbesondere sind der Bremshebel und der Nockenkörper an einer Hebelaufnahme befestigt und vorzugsweise schwenkbar daran gelagert. Insbesondere ist das Zylindergehäuse einstückig mit der Hebelaufnahme verbunden. Insbesondere sind das Zylindergehäuse und die Hebelaufnahme in einen (einstückigen) Basiskörper integriert.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Darstellung eines Mountainbikes mit einer anmeldungsgemäßen Bremsanordnung;
- Fig. 2: eine schematische Darstellung eines Rennrades mit einer anmeldungsgemäßen Bremsanordnung;
- Fig. 3: eine schematische Darstellung einer anmeldungsgemäßen Bremsanordnung an einem Lenker eines Fahrrads in einer Draufsicht;
- Fig. 4: die Bremsanordnung der Fig. 3 in einer perspektivischen Detailansicht;
- Fig. 5: die Bremsanordnung in einer geschnittenen Detailansicht;
- Fig. 6: eine andere geschnittene Detailansicht der Bremsanordnung;
- Fig. 7: eine weitere geschnittene Detailansicht der Bremsanordnung;
- Fig. 8: eine schematische Darstellung einer weiteren anmeldungsgemäßen Bremsanordnung an einem Lenker eines Fahrrads in einer Draufsicht
- Fig. 9: eine schematische Darstellung einer weiteren Bremsanordnung;
- Fig. 10: eine schematische Detaildarstellung einer anderen Bremsanordnung; und
- Fig. 11: die Bremsanordnung der Fig. 10 in einer geschnittenen Detailansicht.

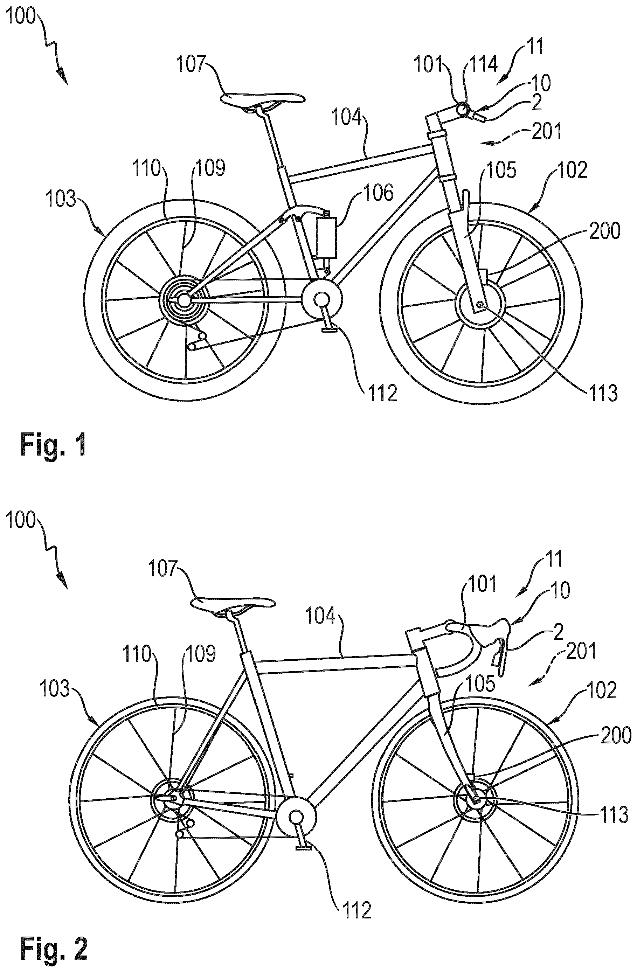

In den Figuren 1 und 2 sind als Mountainbike bzw. Rennrad ausgebildete Fahrräder 100 dargestellt, die jeweils mit einer anmeldungsgemäßen hydraulischen Bremsanordnung 1 ausgerüstet sind. Die Fahrräder 100 verfügen jeweils über ein Vorderrad 102 und ein Hinterrad 103, die über jeweils einen separaten Hydraulikkreis 11 einzeln gebremst werden können. Dazu umfassen die Hydraulikkreise 11 jeweils eine Gebereinheit 10 und eine Nehmereinheit 200.

Ein Fahrrad 100 verfügt über einen Rahmen 104, einen Lenker 101 mit Griffen 114, einen Sattel 107, eine Gabel bzw. Federgabel 105 und im Falle des Mountainbikes kann ein Hinterraddämpfer 106 vorgesehen sein. Zum Antrieb dient eine Tretkurbel 112 mit Pedalen. Gegebenenfalls kann ein elektrischer Hilfsantrieb an der Tretkurbel 112 und/oder den Rädern 102, 103 vorgesehen sein. Die Räder 102, 103 haben jeweils eine Felge 110, welche über Speichen 109 mit einer Nabe verbunden ist. Die Naben der Räder 102, 103 können jeweils über ein Spannsystem 113 (zum Beispiel eine Steckachse oder einen Schnellspanner) an dem Rahmen 104 bzw. der Gabel 105 befestigt sein.

An dem Rahmen 104 und an der Gabel 105 ist jeweils eine hier als hydraulische Scheibenbremse ausgebildete Nehmereinheit 200 befestigt. Die Nehmereinheit 200 ist über eine hier nicht sichtbare Leitungseinrichtung 201 mit der zugehörigen Gebereinheit 10 verbunden, sodass sich ein geschlossener Hydraulikkreis 11 ergibt. Die Gebereinheiten 10 eines Fahrrads 100 sind an gegenüberliegenden Enden des Lenkers 101 montiert und weisen jeweils einen mit den Fingern betätigbaren Bremshebel 2 auf. Bei dem Rennrad 100 ist die Gebereinheit 10 als eine Schalt-Brems-Kombination ausgebildet.

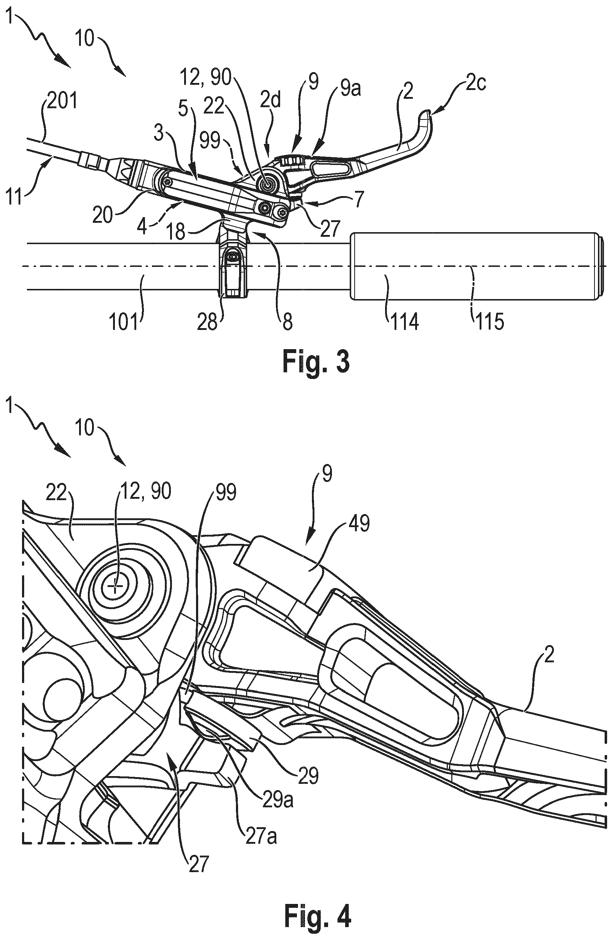

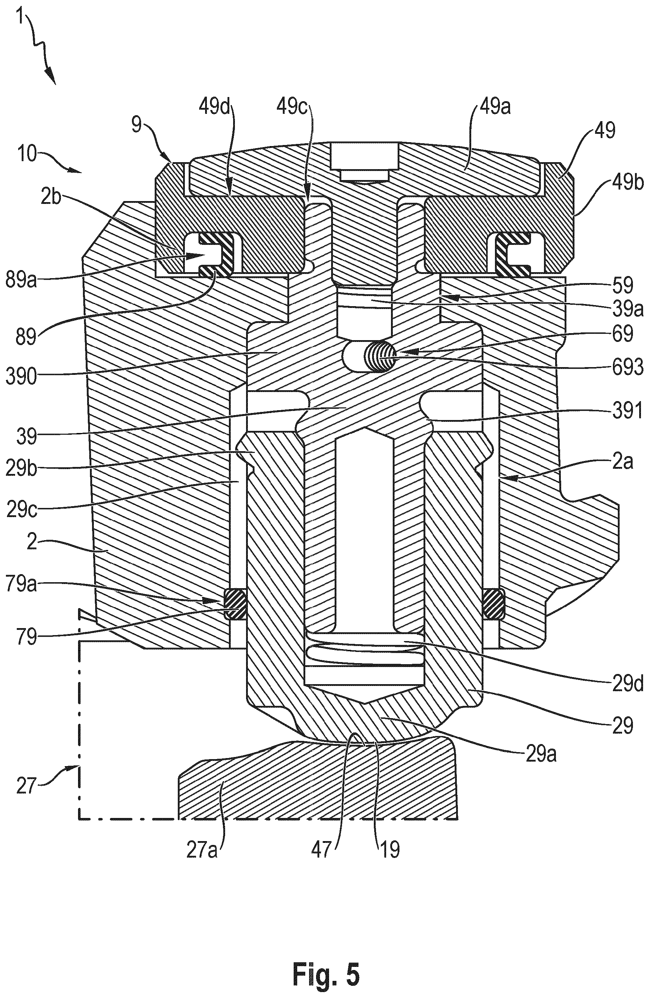

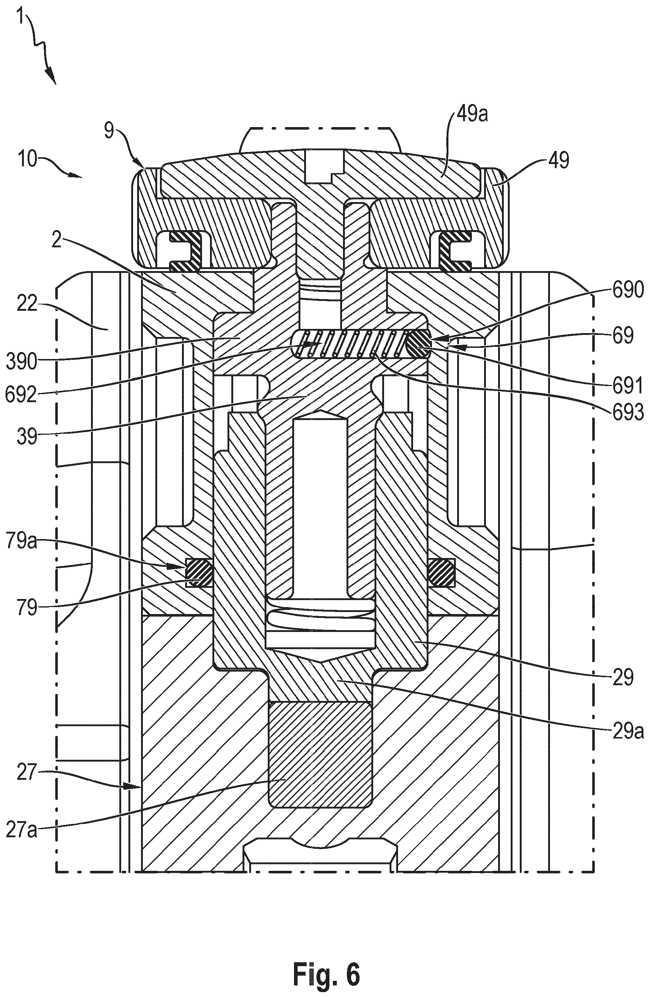

Die anmeldungsgemäße Bremsanordnung 1 wird nun mit Bezug zu den verschiedenen Ansichten der Figuren 3 bis 7 näher beschrieben.

Die Gebereinheit 10 ist hier mittels einer Lenkeranbindung 8 an einem Lenker 101 eines Fahrrads 100 in einer bestimmungsgemäßen Montageposition befestigt. Die Lenkeranbindung umgreift mit zwei Anbindungsabschnitten 18, 28 den Lenker 101. Die Gebereinheit 10 umfasst ein Zylindergehäuse 3 und eine in dem Zylindergehäuse 3 verschiebbar aufgenommene Kolbeneinheit 4 (nicht sichtbar im Inneren). Das Zylindergehäuse 3 weist eine Anschlussöffnung zum Koppeln einer Leitungseinrichtung 201 auf.

An einer Hebelaufnahme 22 ist ein Bremshebel 2 gelagert, sodass dieser um eine Hauptschwenkachse 12 verschwenkt werden kann. Der Bremshebel 2 ist im Bereich seines proximalen Endes 2d mittels einer Betätigungsmechanik 7 an die Kolbeneinheit 4 gekoppelt. Die Betätigungsmechanik 7 umfasst einen Nockenkörper 27 mit einem Nocken 27a. Der Nockenkörper 27 ist an der Hebelaufnahme 22 gelagert, sodass auch er um die Hauptschwenkachse 12 verschwenkt werden kann. Der Bremshebel 2 und der Nockenkörper 27 haben also dieselbe Hauptschwenkachse 12 und liegen im Prinzip lose aufeinander. Das distale Ende 2c des Bremshebels 2 ragt in Richtung des Endes des Lenkers 101.

Durch ein Ziehen am Bremshebel 2 wird die Kolbeneinheit 4 im Zylindergehäuse 3 verschoben, sodass der Bremsdruck im Hydraulikkreis 11 aufgebaut wird. Das Zylindergehäuse 3 und die Hebelaufnahme 22 sowie der Anbindungsabschnitt 18 sind hier integrale Bestandteile eines einstückigen Basiskörpers 20. Zur Bevorratung eines Hydraulikfluids ist eine Ausgleichsbehältereinrichtung 5 vorgesehen. Als Hydraulikfluid wird z. B. ein biologisch abbaubares Öl verwendet. Alternativ können auch ein mineralisches Öl oder eine Bremsflüssigkeit (DOT) vorgesehen sein.

Zur Einstellung einer gewünschten Hebelweite ist im Bremshebel 2 ein Hebelweiteneinstellsystem 9 integriert. Damit kann eingestellt werden, wie weit der Bremshebel 2 relativ zum Nockenkörper 27 um eine Einstellschwenkachse 90 (hier identisch mit der Hauptschwenkachse 12) verschwenkt ist, wenn er auf einem Druckbereich 47 des Nockens 27a aufliegt. Je nach Stellung des Bremshebels 2 relativ zum Nockenkörper 27 ergibt sich der gewünschte Abstand zwischen Bremshebel 2 und Lenker 101 bzw. Griff 114. Um den Bremshebel 2 in der gewünschten Stellung zu halten, werden der Bremshebel 2 und der Nockenkörper 27 hier mittels einer Vorspanneinrichtung 99 aufeinandergedrückt. Dazu weist die Vorspanneinrichtung 99 beispielsweise zwei starke parallele Spiralfedern (Druckfedern) auf.

Das Hebelweiteneinstellsystem umfasst eine drehfest und linear verschiebbar im Bremshebel 2 gelagerte Tonnenmutter 29 und eine drehbar im Bremshebel 2 gelagerte und in axialer Richtung fixierte Spindeleinheit 39. Die Spindeleinheit 39 weist ein Außengewinde auf, welches mit einem Innengewinde 29d der Tonnenmutter 29 im Eingriff steht.

An ihrem oberen Ende ist die Spindeleinheit 39 drehfest mit einem Drehknopf 49 verbunden. Dazu ist die Spindeleinheit 39 mit einem oberen Abschnitt formschlüssig in einem Durchgangsloch 49c des Drehknopfs 49 aufgenommen. Vom Drehknopf 49 aus erstreckt sich die Spindeleinheit 39 durch eine Durchgangsöffnung 59 und weiter in eine Aufnahmeaussparung 2a des Bremshebels 2, wo sie mit der Tonnenmutter 29 verbunden ist. Über eine Halteschraube 49a, welche in einem Innengewinde 39a der Spindeleinheit 39 verschraubt ist, sind der Drehknopf 49 und die Spindeleinheit 39 am Bremshebel 2 fixiert.

Auf einer dem Drehknopf 49 abgewandten Seite der Durchgangsöffnung 59 liegt die Spindeleinheit 39 mit einem Flanschabschnitt 390 an dem Bremshebel 2 an. So wird die Spindeleinheit 39 durch den Flanschabschnitt 390 und den Drehknopf 49 in beide axialen Richtungen am Bremshebel 2 festgelegt.

Für ihre lineare Führung und Verdrehsicherung ist die Tonnenmutter 29 an ihrer Außenseite mit Erhebungen 29b ausgestattet. In der Aufnahmeaussparung 2a des Bremshebels 2 sind Nuten 29c eingearbeitet, in denen die Erhebungen 29b beim Verstellen der Tonnenmutter 29 in axialer Richtung gleiten. Die Nuten 29c sind hier beispielsweise als Axialbohrungen ausgebildet, welche von der Seite des Nockenkörpers 27 aus in den Bremshebel 2 gebohrt werden.

Wenn die Spindeleinheit 39 am Drehknopf 49 gedreht wird, fährt die Tonnenmutter 29 aus dem Bremshebel 2 heraus bzw. herein. Dabei drückt sich ihr Tonnenboden 29a mit einem Druckabschnitt 19 gegen den Druckbereich 47 des Nockenkörpers 27. Der Druckabschnitt 19 ist hier gewölbt und so mit dem Druckbereich 47 abgestimmt, dass die Tonnenmutter 29 stets im passenden Winkel dazu steht und nicht verkannten kann. Um den Drehknopf 49 einfach und komfortabel mit den Fingern drehen zu können, weist er eine umlaufende Verzahnung 49b mit abgerundeten Kanten auf.

Die Erhebungen 29b dienen in Kombination mit einem Dichtkörper 79 auch als Begrenzung beim Herausschrauben der Tonnenmutter 29. Ein Stützkragen 391 der Spindeleinheit 39 dient hier als Begrenzung für das Hereinfahren der Tonnenmutter 29.

Um das Hebelweiteneinstellsystem gut geschützt und kompakt sowie optisch ansprechend in den Bremshebel 2 zu integrieren, bewegt sich bei der Hebelweiteneinstellung nur die Tonnenmutter 29 aus dem Bremshebel 2 heraus. Die Spindeleinheit 39 steht hier auf keiner Seite des Bremshebels 2 über dessen Außenumfang hinaus. Zudem ist der Drehknopf 49 in einer Aufnahmenut 2b des Bremshebels 2 eingelassen. Die Aufnahmenut 2b ist an den Längsseiten offen, sodass der Drehknopf 49 dort gut zugänglich ist, um mit den Fingern gedreht zu werden. Der Durchmesser des Drehknopfs 49 ist hier so gewählt, dass er an den Längsseiten des Bremshebels 2 aus der Aufnahmenut 2b herausragt, um mit geringen Bedienkräften mit zwei Fingern gedreht werden zu können. Des Weiteren ist die Halteschraube 49a in eine zylindrische Vertiefung 49 des Drehknopfes 49 eingelassen, sodass sich eine flächenbündige Stirnseite ergibt.

Da die lineare Führung auch eine Verdrehsicherung bietet, können die übrigen Komponenten rund bzw. zylindrisch ausgeführt werden. Das ermöglicht eine einfache Herstellung und zugleich eine konstruktiv unaufwendige Abdichtung gegen Umwelteinflüsse. Dazu ist hier beispielsweise ein als O-Ring ausgeführter Dichtkörper 79 vorgesehen, welcher in einer umlaufenden Nut 79a in der Aufnahmeaussparung 2a befestigt und an der Tonnenmutter 29 abdichtend anliegt. Zudem erfolgt eine Abdichtung zwischen dem Bremshebel 2 und dem Drehknopf 49. Dazu ist hier ein Dichtelement 89 vorgesehen, welches in einer Ringnut 89a des Drehknopfes 49 befestigt ist. Das Dichtelement ist hier eine Formdichtung mit z. B. einem v-förmigen oder x-förmigen Querschnitt.

Das Hebelweiteneinstellsystem 9 ist hier mit seinen Komponenten nur am Bremshebel 2 befestigt, sodass es zusammen mit dem Bremshebel 2 als eine Montageeinheit 9a gehandhabt werden kann. Zusätzlich kann eine Sicherung und beispielsweise ein Stift vorgesehen sein, welcher den Nockenkörper 27 an der gemeinsamen Hauptschwenkachse 12 im Bremshebel 2 sichert. Durch die Vorspannung einer Vorspanneinrichtung 99 kann so der Bremshebel 2 zusammen mit dem Nockenkörper 27 als eine Einheit vormontiert werden, ohne dass sich der Nockenkörper 27 vom Bremshebel 2 löst.

Zur haptischen und akustischen Rückmeldung beim Drehen des Drehknopfs 49 ist hier ein Klickmechanismus 69 vorgesehen. Dazu ist im Flanschabschnitt 390 ein Aufnahmeraum 692 ausgebildet, in welchem eine Vorspannfeder 693 und ein Klickelement 691 angeordnet sind. Das Klickelement 691 wird von der Vorspannfeder 693 nach radial außen in Klickvertiefungen 690 des Bremshebels 2 gedrückt. Die Klickvertiefungen 690 können durch die Nuten 29c oder auch durch separate Nuten bereitgestellt werden.

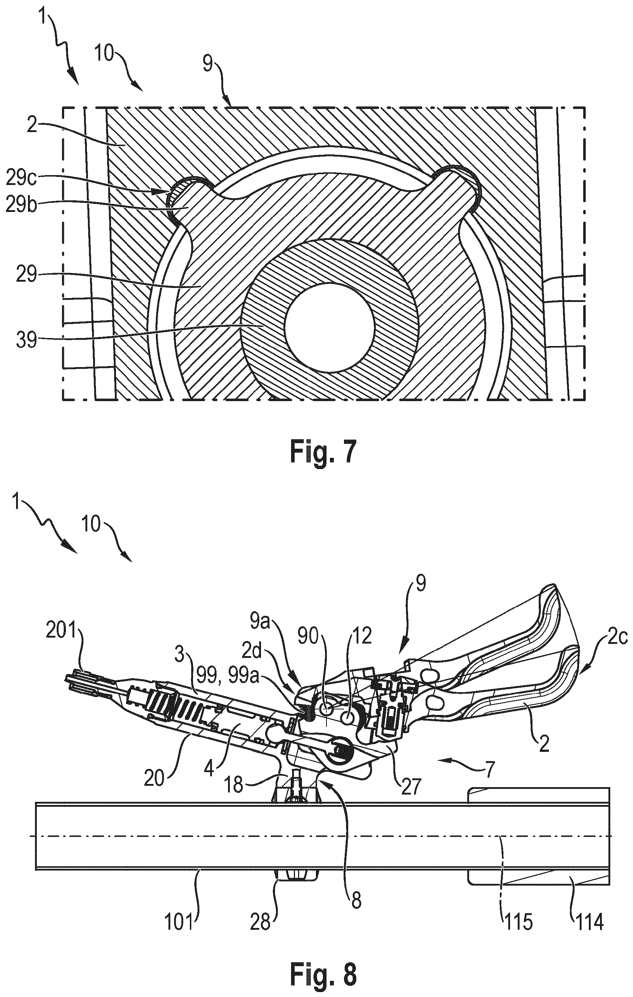

Die Figur 8 zeigt eine Variante der mit Bezug zur Figur 3 beschriebenen Bremsanordnung 1. Die Einstellschwenkachse 90 ist hier separat zur Hauptschwenkachse 12 ausgebildet. Dabei liegt die Hauptschwenkachse 12 näher zu einem distalen Ende 2c des Bremshebels 2 als die Einstellschwenkachse 90.

Der Nockenkörper 27 ist an der Hebelaufnahme 22 gelagert, sodass er um die Hauptschwenkachse 12 verschwenkt werden kann. Der Bremshebel 2 ist an dem Nockenkörper 27 gelagert, sodass er (relativ zum Nockenkörper 27) um die Einstellschwenkachse 90 verschwenkt werden kann. Wenn der Bremshebel 2 zum Bremsen gezogen wird, schwenkt er gemeinsam mit dem Nockenkörper 27 um die Hauptschwenkachse 12. Dabei stützt sich der Bremshebel 2 auf dem Druckbereich 47 des Nockenkörpers 27 ab.

Zur Veranschaulichung der Schwenkbewegung des Bremshebels 2 um die Einstellschwenkachse 90 ist der Bremshebel 2 hier auch noch in einer Stellung mit vergrößerter Hebelweite gezeigt. Wie gut zu erkennen, schwenkt der Bremshebel 90 dabei um die Einstellschwenkachse 90 nach außen, sodass sein distales Ende 2c abschließend weiter vom Lenker 101 bzw. vom Griff 114 entfernt positioniert ist.

Gut zu erkennen sind hier auch die als Druckfedern ausgebildeten Spiralfedern 99a der Vorspanneinrichtung 99. Die Spiralfedern 99a sind parallel nebeneinander und näher zur Einstellschwenkachse 90 als zur Hauptschwenkachse 12 angeordnet. Die Kraftrichtung der Spiralfedern 99a verläuft quer zur Einstellschwenkachse 90 und Hauptschwenkachse 12 sowie quer zur Längsachse 115 des Bremshebels 2.

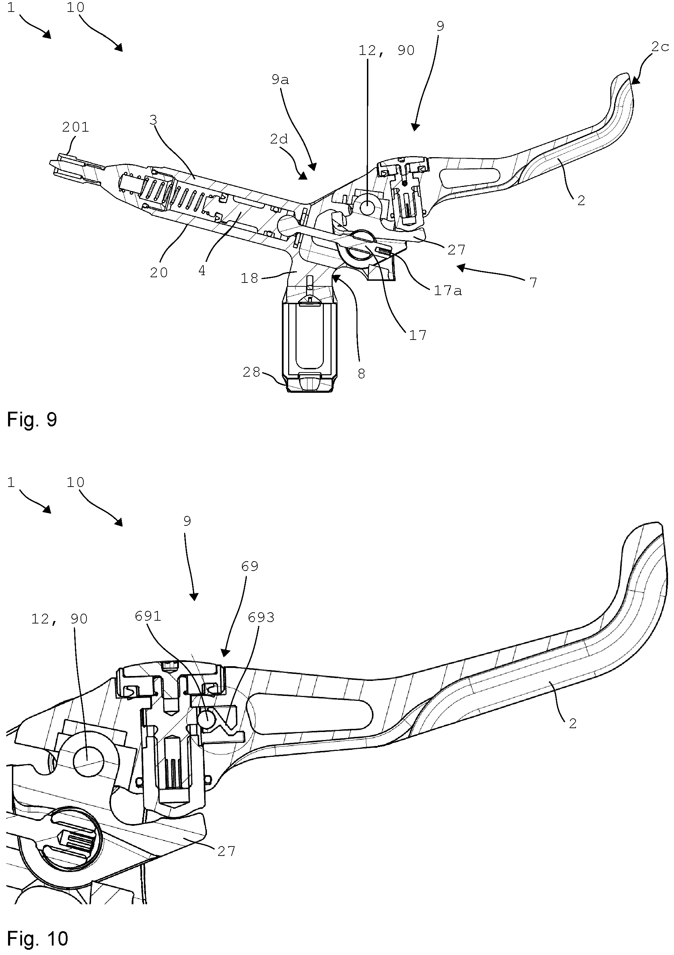

Die Figur 9 zeigt eine Variante der mit Bezug zur Figur 8 beschriebenen Bremsanordnung 1, bei welcher zusätzlich zur Hebelweite auch die Hebelkinematik einstellbar ist. Dazu ist hier ein Pleuel 17 der Betätigungsmechanik 7 mittels einer Gewindeverbindung am Nockenkörper 27 angebunden. Wenn der Pleuel 17 gedreht wird, bewegt sich der Nockenkörper 27 relativ zum Pleuel, sodass die Hebelkinematik verändert wird. Zum Drehen des Pleuels 17 ist dieser mit einer Werkzeugaufnahme 17a ausgestattet. Beispielweise wird zunächst die Hebelkinematik auf die jeweiligen Bedürfnisse angepasst (wobei aber auch die Hebelweite verändert wird). Anschließend erfolgt die Einstellung der Hebelweite (wie es zuvor beschrieben wurde). Dabei kann die Hebelweite auch in dieser Variante unabhängig von der Hebelkinematik mit dem Hebelweiteneinstellsystem 9 angepasst werden.

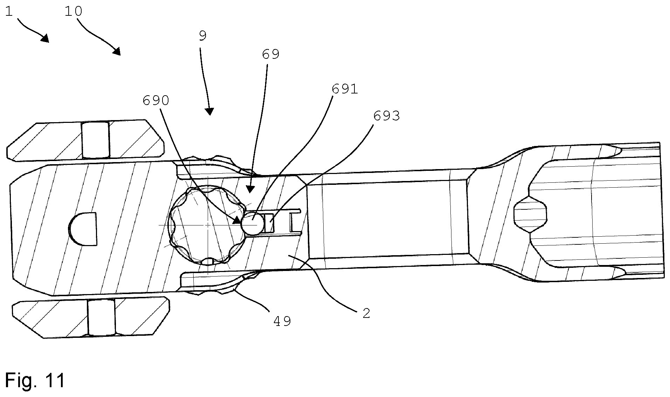

Die Figur 10 und 11 zeigen eine Bremsanordnung 1, bei welcher der Klickmechanismus 69 eine einstückig mit dem Bremshebel 2 verbundene Vorspannfeder 693 aufweist. Dazu ist der Bremshebel 2 hier mittels eines additiven Fertigungsverfahrens und beispielsweise einem 3D-Druckverfahren hergestellt. Als Werkstoff ist z. B. ein Titanwerkstoff oder ein anderer geeigneter Leichtbauwerkstoff vorgesehen. Um die Vorspannfeder 693 vor Abnutzung zu schützen, interagiert sie hier nicht direkt mit den Klickvertiefungen 690. Die Vorspannfeder 693 drückt auf ein hier als Kugel ausgebildetes Klickelement 691. Die Kugel ist z. B. aus Stahl oder einem anderen entsprechend harten Werkstoff gefertigt. Die Kugel wird dann durch die Vorspannfeder 693 in Klickvertiefungen 690 gedrückt. Die Klickvertiefungen 690 werden hier durch eine sternförmige Außenkontur der Spindeleinheit bereitgestellt.

**Bezugszeichenliste:**

| | | | |
|---|---|---|---|
| 1 | Bremsanordnung | 49b | Verzahnung |
| 2 | Bremshebel | 49c | Durchgangsloch |
| 2a | Aufnahmeaussparung | 49d | Vertiefung |
| 2b | Aufnahmenut | 59 | Durchgangsöffnung |
| 2c | Ende | 69 | Klickmechanismus |
| 2d | Ende | 79 | Dichtkörper |
| 3 | Zylindergehäuse | 79a | Nut |
| 4 | Kolbeneinheit | 89 | Dichtelement |
| 5 | Ausgleichsbehältereinrichtung | 89a | Ringnut |
| | | 90 | Einstellschwenkachse |
| 7 | Betätigungsmechanik | 99 | Vorspanneinrichtung |
| 8 | Lenkeranbindung | 99a | Spiralfeder |
| 9 | Hebelweiteneinstellsystem | 100 | Fahrrad |
| 9a | Montageeinheit | 101 | Lenker |
| 10 | Gebereinheit | 102 | Rad, Vorderrad |
| 11 | Hydraulikkreis | 103 | Rad, Hinterrad |
| 12 | Hauptschwenkachse | 104 | Rahmen |
| 17 | Pleuel | 105 | Gabel, Federgabel |
| 17a | Werkzeugaufnahme | 106 | Hinterraddämpfer |
| 18 | Anbindungsabschnitt | 107 | Sattel |
| 19 | Druckabschnitt | 109 | Speiche |
| 20 | Basiskörper | 110 | Felge |
| 22 | Hebelaufnahme | 112 | Tretkurbel |
| 27 | Nockenkörper | 113 | Spannsystem |
| 27a | Nocken | 114 | Griff |
| 28 | Anbindungsabschnitt | 115 | Längsachse |
| 29 | Tonnenmutter | 200 | Nehmereinheit |
| 29a | Tonnenboden | 201 | Leitungseinrichtung |
| 29b | Erhebung | 390 | Flanschabschnitt |
| 29c | Nut | 391 | Stützkragen |
| 29d | Gewinde | 690 | Klickvertiefung |
| 39 | Spindeleinheit | 691 | Klickelement |
| 39a | Gewinde | 692 | Aufnahmeraum |
| 47 | Druckbereich | 693 | Vorspannfeder |
| 49 | Drehknopf | | |
| 49a | Halteschraube | | |

## Patentansprüche

1. Hydraulische Bremsanordnung (1) für ein wenigstens teilweise muskelbetriebenes Fahrrad (100), umfassend wenigstens eine mit einer Nehmereinheit (200) fluidisch verbindbare Gebereinheit (10), wobei die Gebereinheit (10) einen schwenkbaren Bremshebel (2) und ein Zylindergehäuse (3) und eine in dem Zylindergehäuse (3) verschiebbar aufgenommene Kolbeneinheit (4) aufweist, wobei der Bremshebel (2) auf einen schwenkbaren Nockenkörper (27) einer Betätigungsmechanik (7) zur Betätigung der Kolbeneinheit (4) einwirkt und dazu mit einem Druckabschnitt (19) auf einem Druckbereich (47) des Nockenkörpers (27) aufliegt, wobei der Bremshebel (2) und der Nockenkörper (27) durch ein Ziehen des Bremshebels (2) gemeinsam um eine Hauptschwenkachse (12) schwenkbar sind und wobei der Bremshebel (2) relativ zum Nockenkörper (27) um eine Einstellschwenkachse (90) schwenkbar ist und wobei mittels eines Hebelweiteneinstellsystems (9) einstellbar ist, wie weit der Bremshebel (2) relativ zum Nockenkörper (27) um die Einstellschwenkachse (90) verschwenkt ist, wenn er auf dem Druckbereich (47) des Nockenkörpers (27) aufliegt,
**dadurch gekennzeichnet,**
**dass** das Hebelweiteneinstellsystem (9) eine drehfest und linear verschiebbar im Bremshebel (2) gelagerte Tonnenmutter (29) und eine drehbar im Bremshebel (2) gelagerte und in axialer Richtung fixierte Spindeleinheit (39) umfasst und dass die Tonnenmutter (29) und die Spindeleinheit (39) miteinander im Eingriff stehen, sodass die Tonnenmutter (29) durch Drehung der Spindeleinheit (39) linear verschiebbar ist und dass die Tonnenmutter (29) an ihrem Tonnenboden (29a) den Druckabschnitt (19) bereitstellt.

2. Bremsanordnung (1) nach dem vorhergehenden Anspruch, wobei die Hauptschwenkachse (12) und die Einstellschwenkachse (90) identisch sind oder wobei die Hauptschwenkachse (12) näher zu einem distalen Ende (2c) des Bremshebels (2) liegt als die Einstellschwenkachse (90).

3. Bremsanordnung (1) nach einem der vorhergehenden Ansprüche, wobei die Spindeleinheit (39) drehfest mit einem Drehknopf (49) verbunden ist, sodass durch Drehung des Drehknopfes (49) die Spindeleinheit (39) gedreht werden kann und wobei die Spindeleinheit (39) mittels des Drehknopfes (49) an dem Bremshebel (2) gesichert ist.

4. Bremsanordnung (1) nach einem der vorhergehenden Ansprüche, wobei die Spindeleinheit (39) durch eine Durchgangsöffnung (59) im Bremshebel (2) verläuft und wobei die Spindeleinheit (39) auf einer der Tonnenmutter (29) zugewandten Seite der Durchgangsöffnung (59) einen Flanschabschnitt (390) aufweist, welcher über einen Öffnungsquerschnitt der Durchgangsöffnung (59) hinausragt.

5. Bremsanordnung (1) nach den beiden vorhergehenden Ansprüchen, wobei der Drehknopf (49) auf einer der Tonnenmutter (29) abgewandten Seite der Durchgangsöffnung (59) angeordnet ist und über einen Öffnungsquerschnitt der Durchgangsöffnung (59) hinausragt und wobei der Drehknopf (49) lösbar an der Spindeleinheit (39) befestigt ist, sodass die Spindeleinheit (39) ohne den Drehknopf (49) durch die Durchgangsöffnung (59) hindurchgesteckt werden kann und wobei der Drehknopf (49) mittels wenigstens einer zentralen, in axialer Richtung verlaufenden Halteschraube (49a) an der Spindeleinheit (39) befestigt ist.

6. Bremsanordnung (1) nach einem der vorhergehenden Ansprüche, wobei die Tonnenmutter (29) in axialer Richtung verlaufende Erhebungen (29b) aufweist und wobei der Bremshebel (2) mit den Erhebungen (29b) korrespondierende Nuten (29c) aufweist, sodass die Tonnenmutter (29) in den Nuten (29c) linear geführt wird und gegen Verdrehen gesichert ist.

7. Bremsanordnung (1) nach einem der vorhergehenden Ansprüche, wobei die Spindeleinheit (39) mit ihrem der Tonnenmutter (29) zugewandten Ende nicht über den Außenumfang des Bremshebels (2) hinausragt und wobei die Spindeleinheit (39) vorzugsweise auch mit ihrem dem Drehknopf (49) zugewandten Ende nicht über den Außenumfang des Bremshebels (2) hinausragt.

8. Bremsanordnung (1) nach Anspruch 3, wobei der Drehknopf (49) in den Bremshebel (2) eingelassen ist und an zwei gegenüber liegenden Längsseiten des Bremshebels (2) über den Bremshebel (2) hinausragt und wobei die Tonnenmutter (29) in den Bremshebel (2) eingelassen ist und insbesondere nur an einer dem Nockenkörper (27) zugewandten Seite des Bremshebels (2) über den Bremshebel (2) hinausragt.

9. Bremsanordnung (1) nach einem der vorhergehenden Ansprüche, umfassend einen Klickmechanismus (69) zur Erzeugung wenigstens eines haptisch und/oder akustisch wahrnehmbaren Klicks beim Drehen eines Drehknopfs (49), wobei der Klickmechanismus (69) Klickvertiefungen (690) und wenigstens ein federvorgespanntes Klickelement (691) zum Eingreifen in die Klickvertiefungen (690) umfasst.

10. Bremsanordnung (1) nach dem vorhergehenden Anspruch, wobei der Klickmechanismus (69) wenigstens eine einstückig mit dem Bremshebel (2) verbundene Vorspannfeder (693) zum Vorspannen des Klickelements (691) umfasst und wobei der Bremshebel (2) vorzugsweise mittels eines additiven Fertigungsverfahrens hergestellt ist.

11. Bremsanordnung (1) nach einem der vorhergehenden Ansprüche, wobei zwischen der Tonnenmutter (29) und dem Bremshebel (2) wenigstens ein Dichtkörper (79) angeordnet ist.

12. Bremsanordnung (1) nach Anspruch 3, wobei zwischen einer dem Bremshebel (2) zugewandten Stirnseite des Drehknopfs (49) und dem Bremshebel (2) wenigstens ein Dichtelement (89) angeordnet ist.

13. Bremsanordnung (1) nach einem der vorhergehenden Ansprüche, wobei die Tonnenmutter (29) nur lose auf dem Druckbereich (47) des Nockenkörpers (27) aufliegt.

14. Bremsanordnung (1) nach einem der vorhergehenden Ansprüche, wobei der Druckabschnitt (19) gewölbt ausgebildet ist und wobei der Nockenkörper (27) am Druckbereich (47) korrespondierend zum Druckabschnitt (19) gewölbt ist, sodass der Druckabschnitt (19) bei allen vorgesehenen Hebelweiteneinstellungen nicht am Nockenkörper (27) verkantet.

15. Bremsanordnung (1) nach einem der vorhergehenden Ansprüche, wobei das Hebelweiteneinstellsystem am Bremshebel (2) befestigt ist und zusammen mit dem Bremshebel (2) eine Montageeinheit (9a) bildet, welche als ein Bauteil gehandhabt und vorzugsweise als ein Bauteil von einer Hebelaufnahme (22) der Gebereinheit (10) gelöst und dran befestigt werden kann.

## Claims

1. A hydraulic brake arrangement (1) for an at least partially muscle-powered bicycle (100), comprising at least one master unit (10) provided for fluid connection with a slave unit (200), wherein the master unit (10) comprises a pivotable brake lever (2) and a cylinder housing (3), and a piston unit (4) displaceably received in the cylinder housing (3), wherein the brake lever (2) acts on the pivotable cam body (27) of an actuating mechanism (7) for actuating the piston unit (4), and to this end it rests on the pressure area (47) of the cam body (27) with the pressure section (19), wherein the brake lever (2) and the cam body (27) are jointly pivotable around the principal pivot axis (12) by pulling the brake lever (2), and wherein the brake lever (2) is pivotable relative to the cam body (27) around the setting pivot axis (90), and wherein a lever width adjusting system (9) allows to preset how far the brake lever (2) pivots relative to the cam body (27) around the setting pivot axis (90), when it rests on the pressure area (47) of the cam body (27),
**characterized in**
**that** the lever width adjusting system (9) comprises a barrel nut (29) non-rotatably supported and linearly displaceable in the brake lever (2), and a spindle unit (39) rotatably supported in the brake lever (2) and fixed in the axial direction, and that the barrel nut (29) and the spindle unit (39) are in engagement with one another, so that the barrel nut (29) is linearly displaceable by rotating the spindle unit (39), and that the barrel nut (29) provides the pressure section (19) on its barrel bottom (29a).

2. The brake arrangement (1) according to the preceding claim,
wherein the principal pivot axis (12) and the setting pivot axis (90) are identical, or wherein the principal pivot axis (12) is closer to the distal end (2c) of the brake lever (2) than is the setting pivot axis (90).

3. The brake arrangement (1) according to any of the preceding claims, wherein the spindle unit (39) is non-rotatably connected with a rotary knob (49), so that the spindle unit (39) can be rotated by rotating the rotary knob (49), and wherein the spindle unit (39) is secured to the brake lever (2) by means of the rotary knob (49).

4. The brake arrangement (1) according to any of the preceding claims, wherein the spindle unit (39) extends through a through hole (59) in the brake lever (2), and wherein the spindle unit (39) comprises a flange section (390) on a side of the through hole (59) facing the barrel nut (29), which protrudes beyond the opening cross-section of the through hole (59).

5. The brake arrangement (1) according to the two preceding claims, wherein the rotary knob (49) is disposed on a side of the through hole (59) facing away from the barrel nut (29) and protrudes beyond the opening cross-section of the through hole (59), and wherein the rotary knob (49) is detachably fastened to the spindle unit (39), so that the spindle unit (39) can be inserted through the through hole (59) without the rotary knob (49), and wherein the rotary knob (49) is fastened to the spindle unit (39) by at least one central retaining screw (49a) extending in the axial direction.

6. The brake arrangement (1) according to any of the preceding claims, wherein the barrel nut (29) comprises elevations (29b) extending in the axial direction, and wherein the brake lever (2) comprises grooves (29c) corresponding with the elevations (29b), so that the barrel nut (29) is linearly guided in the grooves (29c) and is torsion resistant.

7. The brake arrangement (1) according to any of the preceding claims, wherein the spindle unit (39), with its end facing the barrel nut (29), does not protrude beyond the outer periphery of the brake lever (2), and wherein the spindle unit (39) preferably does again not protrude, with its end facing the rotary knob (49), beyond the outer periphery of the brake lever (2).

8. The brake arrangement (1) according to claim 3, wherein the rotary knob (49) is recessed in the brake lever (2) and protrudes beyond the brake lever (2) in two opposite longitudinal faces of the brake lever (2), and wherein the barrel nut (29) is recessed in the brake lever (2) and protrudes beyond the brake lever (2) in particular only on the side of the brake lever (2) facing the cam body (27).

9. The brake arrangement (1) according to any of the preceding claims, comprising a click-in mechanism (69) for generating at least one click provided for haptic and/or acoustic perception when rotating the rotary knob (49), wherein the click-in mechanism (69) comprises click-in depressions (690) and at least one spring-biased click-in member (691) for engaging in the click-in depressions (690).

10. The brake arrangement (1) according to the preceding claim, wherein the click-in mechanism (69) comprises at least one biasing spring (693) integrally connected with the brake lever (2) for biasing the click-in member (691), and wherein the brake lever (2) is preferably manufactured by means of an additive production process.

11. The brake arrangement (1) according to any of the preceding claims, wherein at least one sealing body (79) is disposed between the barrel nut (29) and the brake lever (2).

12. The brake arrangement (1) according to claim 3, wherein at least one sealing member (89) is disposed between the front face of the rotary knob (49) facing the brake lever (2), and the brake lever (2).

13. The brake arrangement (1) according to any of the preceding claims, wherein the barrel nut (29) rests only loosely on the pressure area (47) of the cam body (27).

14. The brake arrangement (1) according to any of the preceding claims, wherein the pressure section (19) is configured curved, and wherein the cam body (27) is curved in the pressure area (47) corresponding to the pressure section (19), so that the pressure section (19) does not cant to the cam body (27) in any lever width setting provided.

15. The brake arrangement (1) according to any of the preceding claims, wherein the lever width adjusting system is fastened to the brake lever (2) and, together with the brake lever (2), forms an assembly unit (9a) which can be handled as one component, and can preferably be detached from, and attached to, the lever accommodation (22) of the master unit (10) as one component.

## Revendications

1. Ensemble de freinage hydraulique (1) pour une bicyclette (100) entraînée, au moins en partie, par force musculaire, comprenant au moins un une unité émettrice (10) qui peut être reliée fluidiquement à une unité réceptrice (200), dans lequel ladite unité émettrice (10) présente un levier de frein pivotant (2) et un corps de cylindre (3) ainsi qu'une unité piston (4) logée à coulissement dans le corps de cylindre (3), dans lequel ledit levier de frein (2) agit sur un corps de came pivotant (27) d'un système mécanique d'actionnement (7) pour actionner ladite unité piston (4) et repose, à cette fin, par une section de pression (19) sur une zone de pression (47) du corps de came (27), dans lequel ledit levier de frein (2) et le corps de came (27) peuvent pivoter ensemble autour d'un axe de pivotement principal (12) par traction sur le levier de frein (2), et dans lequel le levier de frein (2) peut pivoter par rapport au corps de came (27) autour d'un axe de pivotement de réglage (90), et dans lequel un système de réglage de la course de levier (9) permet d'ajuster la course du levier de frein (2) par rapport au corps de came (27) autour de l'axe de pivotement de réglage (90) lorsqu'il repose sur la zone de pression (47) du corps de came (27),
**caractérisé par le fait**
**que** le système de réglage de la course du levier (9) comprend un écrou cylindrique (29) monté dans le levier de frein (2) de manière à être solidaire en rotation et déplaçable linéairement, ainsi qu'une unité de broche (39) logée à rotation dans le levier de frein (2) et fixée dans la direction axiale, et que l'écrou cylindrique (29) et l'unité de broche (39) sont en prise de sorte que l'écrou cylindrique (29) peut être déplacé linéairement par la rotation de l'unité de broche (39), et que l'écrou cylindrique (29) fournit la section de pression (19) à sa base cylindrique (29a).

2. Ensemble de freinage (1) selon la revendication précédente, dans lequel l'axe de pivotement principal (12) et l'axe de pivotement de réglage (90) sont identiques, ou dans lequel l'axe de pivotement principal (12) est situé plus près d'une extrémité distale (2c) du levier de frein (2) que l'axe de pivotement de réglage (90).

3. Ensemble de freinage (1) selon l'une quelconque des revendications précédentes, dans lequel l'unité de broche (39) est reliée de manière solidaire en rotation à un bouton rotatif (49) de sorte que l'unité de broche (39) puisse être mise en rotation par la rotation du bouton rotatif (49), et dans lequel l'unité de broche (39) est fixée au levier de frein (2) au moyen du bouton rotatif (49).

4. Ensemble de freinage (1) selon l'une quelconque des revendications précédentes, dans lequel l'unité de broche (39) s'étend à travers une ouverture traversante (59) dans le levier de frein (2) et dans lequel l'unité de broche (39) présente, sur un côté de l'ouverture traversante (59) tourné vers l'écrou cylindrique (29), une section de bride (390) qui dépasse une section d'ouverture de l'ouverture traversante (59).

5. Ensemble de freinage (1) selon les deux revendications précédentes, dans lequel le bouton rotatif (49) est disposé sur un côté de l'ouverture traversante (59) qui montre dans la direction opposée à l'écrou cylindrique (29) et dépasse une section d'ouverture de l'ouverture traversante (59), et dans lequel le bouton rotatif (49) est fixé de manière amovible à l'unité de broche (39) de sorte que l'on peut faire passer l'unité de broche (39) à travers l'ouverture traversante (59) sans le bouton rotatif (49), et dans lequel le bouton rotatif (49) est fixé à l'unité de broche (39) au moyen d'au moins une vis de retenue centrale (49a) s'étendant dans la direction axiale.

6. Ensemble de freinage (1) selon l'une quelconque des revendications précédentes, dans lequel l'écrou cylindrique (29) présente des saillies (29b) s'étendant dans la direction axiale et dans lequel le levier de frein (2) comprend des rainures (29c) correspondant aux saillies (29b), de sorte que l'écrou cylindrique (29) soit guidé linéairement dans les rainures (29c) et est empêché de tourner.

7. Ensemble de freinage (1) selon l'une quelconque des revendications précédentes, dans lequel l'unité de broche (39) ne dépasse pas la circonférence extérieure du levier de frein (2) par son extrémité montrant vers l'écrou cylindrique (29), et dans lequel l'unité de broche (39) ne dépasse de préférence pas non plus la circonférence extérieure du levier de frein (2) par son extrémité montrant vers le bouton rotatif (49).

8. Ensemble de freinage (1) selon la revendication 3, dans lequel le bouton rotatif (49) est encastré dans le levier de frein (2) et dépasse le levier de frein (2) sur deux côtés longitudinaux opposés du levier de frein (2), et dans lequel l'écrou cylindrique (29) est encastré dans le levier de frein (2) et, en particulier, ne dépasse le levier de frein (2) que sur un côté du levier de frein (2) montrant vers le corps de came (27).

9. Ensemble de freinage (1) selon l'une quelconque des revendications précédentes, comprenant un mécanisme de cliquet (69) destiné à générer au moins un clic perceptible haptiquement et/ou acoustiquement lors de la rotation d'un bouton rotatif (49), dans lequel ledit mécanisme de cliquet (69) comprend des creux de cliquet (690) et au moins un élément de cliquet (691) précontraint par ressort et destiné à s'engager dans lesdits creux de cliquet (690).

10. Ensemble de freinage (1) selon la revendication précédente, dans lequel le mécanisme de cliquet (69) comprend au moins un ressort de précontrainte (693) réalisé en une seule pièce avec le levier de frein (2) et destiné à précontraindre l'élément de cliquet (691), et dans lequel le levier de frein (2) est de préférence fabriqué par un procédé de fabrication additive.

11. Ensemble de freinage (1) selon l'une quelconque des revendications précédentes, dans lequel au moins un corps d'étanchéité (79) est disposé entre l'écrou cylindrique (29) et le levier de frein (2).

12. Ensemble de frein (1) selon la revendication 3, dans lequel au moins un élément d'étanchéité (89) est disposé entre une face frontale du bouton rotatif (49), montrant vers le levier de frein (2), et le levier de frein (2).

13. Ensemble de freinage (1) selon l'une quelconque des revendications précédentes, dans lequel l'écrou cylindrique (29) ne repose que de manière lâche sur la zone de pression (47) du corps de came (27).

14. Ensemble de freinage (1) selon l'une quelconque des revendications précédentes, dans lequel la section de pression (19) est réalisée de manière bombée et dans lequel le corps de came (27) au niveau de la zone de pression (47) est bombée de manière correspondante à la section de pression (19) de sorte que, dans tous les réglages prévus de la course du levier, la section de pression (19) ne se cale pas sur le corps de came (27).

15. Ensemble de freinage (1) selon l'une quelconque des revendications précédentes, dans lequel le système de réglage de la course du levier est fixé au levier de frein (2) et forme avec le levier de frein (2) une unité d'assemblage (9a) qui peut être manipulée comme un seul composant et de préférence être détachée comme un seul composant d'un logement de levier (22) de l'unité émettrice (10) et être fixée à celui-ci.
